# EUROPEAN PATENT SPECIFICATION

(11) **EP 0 561 355 B1**
(45) Date of publication and mention of the grant of the patent: **07.08.1996**
(21) Application number: 93104280.8
(22) Date of filing: 16.03.1993
(51) Int. Cl.: B60R 22/32

(54) **Safety-belt cutter**
Sicherheitsgurt-Durchschneidevorrichtung
Coupeur pour ceinture de sécurité

(30) Priority: 17.03.1992 FI 920219 U
(43) Date of publication of application: 22.09.1993
(73) Proprietor: Riihimäki, Antero, SF-02770 Espoo (FI)
(72) Inventor: Riihimäki, Antero, SF-02770 Espoo (FI)
(74) Representative: Altenburg, Udo, Dipl.-Phys.

(56) References cited:
- DE-A- 2 841 404
- DE-A- 3 443 205
- FR-A- 2 289 213
- FR-A- 2 581 944
- FR-A- 2 647 069

## Description

The present invention relates to a safety-belt cutter which is intended to be used, for example, in the event of an accident, or whenever it is impossible to open the lock of a safety belt, and which is attached to the safety belt and can, with one hand, be primed for cutting, whereafter the safety belt can be cut with a simple pulling movement on the pulling ring of the safety-belt cutter, the safety-belt cutter being made up of a frame and, inside it, a cutting blade protected by a means for preventing cutting from inadvertent pulling movements.

DE-A-2 841 404 describes a safety-belt cutter on which the preamble to the claim of the present invention is based.

It has been observed in cases of accidents that the lock of a safety belt has become locked or that, for various reasons, the person in the safety belt has not been able to reach the lock of the safety belt, for example because the automobile has been lying on its roof. First-aid kits currently include a cutter needed in such situations; by means of the cutter another person can cut the safety belt. In such accidents there is always the risk that the vehicle will catch fire, and therefore it is necessary to get out of the vehicle as quickly as possible. Various safety-belt cutters of different shapes have been developed for such situations, but tests have shown that they do not function satisfactorily. This is usually due to the fact that the safety belt is not always taut when the cutting is done. Therefore the safety belt tends to wrinkle and get caught in the cutter. The object of the present invention is to eliminate the disadvantages described above.

The safety-belt cutter according to the invention is characterized in that within the frame part, between the cutting blade and the safety belt, there is a slide which supports the safety belt and will keep it taut during a cutting movement. All tests have shown that by using a safety-belt cutter of this type a safety belt can be cut 100 %, even if the safety belt is not taut. Immediately after an accident, the means preventing cutting is first detached, whereafter the pulling ring of the safety-belt cutter is gripped and the safety belt is cut with a simple pulling movement.

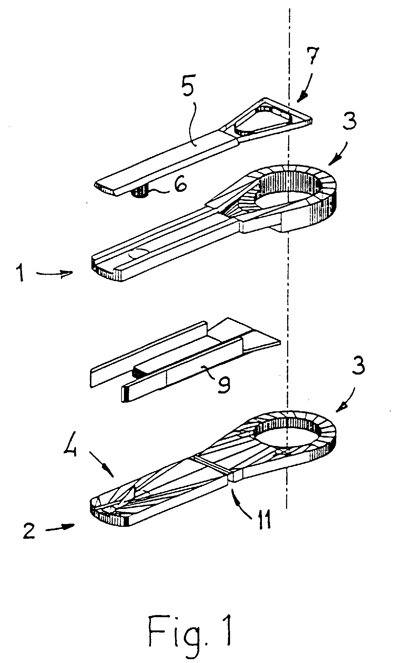

The invention is described below with the help of an example, with reference to the accompanying drawings, in which
Figure 1 depicts the parts of a safety-belt cutter, exploded,

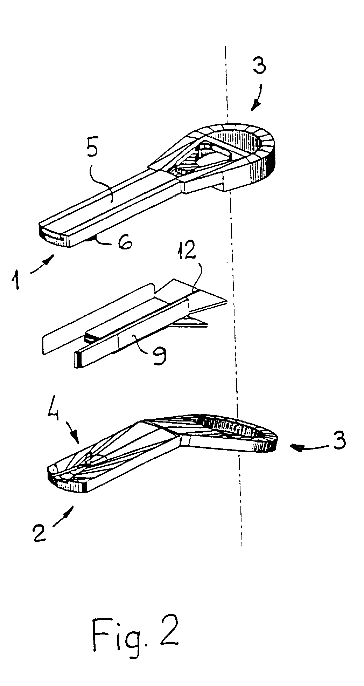

Figure 2 depicts the same as Figure 1, but partly assembled,
Figure 3 depicts the installation of a safety-belt cutter on a safety belt, and

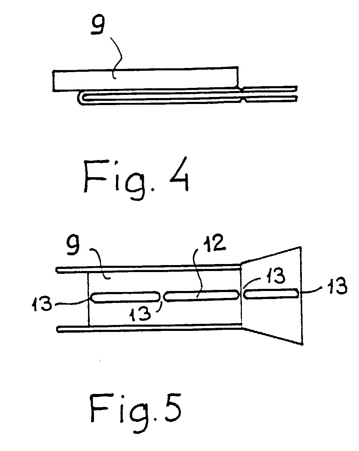

Figures 4 and 5 depict side and top views of the slide.

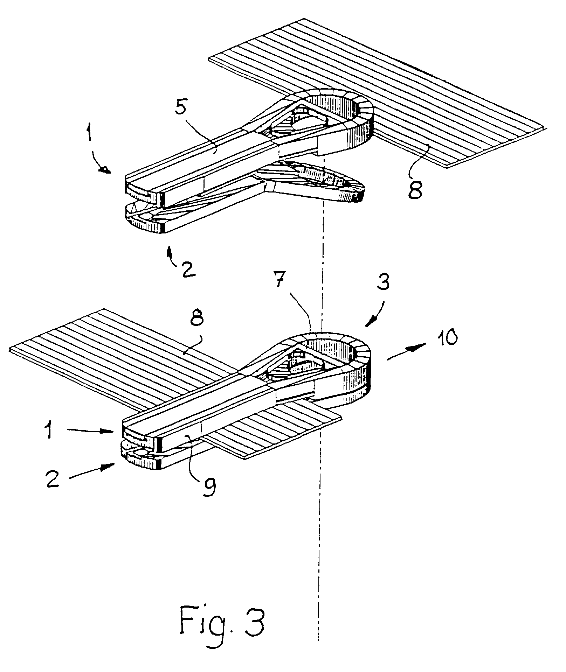

The safety-belt cutter is made up of upper and lower frame parts 1, 2, with a pulling ring 3 at one end. The lower frame part 2 has a blade 4 and an integrally cast hinge area 11. In the upper frame part 1 there is installed a means 5 for preventing cutting, the means having a pin 6 which prevents cuttings caused by inadvertent pulling movements. Before actual cutting, the means for preventing cutting is detached by lifting it from the frame part 1 by a ring 7. The means for preventing cutting is attached to the upper frame part 1 by using a so-called dovetail joint. Within the frame part there is installed a slide 9 which supports the safety belt 8 and keeps the safety belt taut during a cutting movement. The slide 9 is a separate part, which will remain in place to keep the safety belt taut when the safety-belt cutter moves in the pulling direction 10. The safety-belt cutter is made of plastic and can, by using tenon joints known per se, be fastened to the safety belt 8, as shown in Figure 3. The upper part of Figure 3 shows the installation assembly of the cutter, all the parts having been "factory" assembled. The installation on the belt takes place by passing the belt between the slide 9 and the pulling-ring end 3 of the lower frame 2 and by pressing the tenons of the lower frame 2 into the holes in the upper frame 1 to form a permanent so-called snap-on joint. The safety belt can slide freely through the cutter. The slide 9 has a slit 12 along which the blade will run. The slide halves are interconnected by bridges 13 in the slit 12, the bridges holding the slide together and being cut together with the safety belt. The lower surface of the upper frame 1 has a triangular wedge which supports the blade 4 and has a snap connecting to the lower frame. When the slide begins moving with the belt, the wedge will spread the slide halves apart and will tighten the belt. The blade will cut the belt and the bridges 13 of the slide at the same time. After the cutting, the safety-belt cutter will fall apart and be no longer usable.

The invention is not limited to the above example; the safety-belt cutter can also have some other form. The main idea is that the safety-belt cutter is attached to the safety belt and will be within reach in the event of an accident.

## Claims

1. A safety-belt cutter which is intended to be used, for example, in the event of an accident, and whenever it is impossible to open the lock of a safety belt (8), and which is attached to the safety belt and can, with one hand, be primed for cutting, whereafter the safety belt can be cut with a simple pulling movement on the pulling ring (3) of the safety-belt cutter, the safety-belt cutter being made up of a frame part (1, 2) within which there is a cutting blade (4) protected by a means (5, 6) for preventing cutting from inadvertent pulling movements, **characterized** in that between the cutting blade (4) and the safety belt (8) within the frame part (1, 2) there is a slide (9) which supports the safety belt (8) and will keep the safety belt (8) taut during the cutting movement.

## Patentansprüche

1. Sicherheitsgurtdurchtrenner, der beispielsweise im Falle eines Unglückes und stets dann verwendet werden soll, wenn es unmöglich ist, das Schloß eines Sicherheitsgurtes (8) zu öffnen, und der am Sicherheitsgurt befestigt ist und mit nur einer Hand zum Durchtrennen aktiviert werden kann, woraufhin der Sicherheitsgurt durch eine einfache Ziehbewegung am Zugring (3) durchgetrennt werden kann, wobei der Sicherheitsgurt durchtrennbar aus einem Rahmenteil (1, 2) aufgebaut ist, in welchem sich eine Schneidklinge (4) befindet, die durch eine Vorrichtung (5, 6) zur Verhinderung des Durchtrennens durch versehentliche Ziehbewegungen geschützt wird, dadurch gekennzeichnet, daß sich zwischen der Schneidklinge (4) und dem Sicherheitsgurt (8) ein Schieber (9) innerhalb des Rahmenteils (1, 2) befindet, der den Sicherheitsgurt (8) trägt und ihn während der Durchtrennbewegung straff hält.

## Revendications

1. Tronçonneuse pour ceinture de sécurité, destinée à être utilisée, par exemple, au cas d'un accident et aussi toujours quand il est impossible d'ouvrir la serrure d'une ceinture de sécurité (8), ladite serrure étant fixée à la ceinture de sécurité et peut être activée avec une seule main pour préparer l'action de coupage, ladite activation permettant de couper ladite ceinture de sécurité par un simple mouvement de traction effectué sur un anneau de traction (3) de la ceinture de sécurité, la ceinture de sécurité étant pourvue d'un élément à cadre (1, 2) à l'intérieur duquel se trouve disposée une lame (4) protégée par un moyen (5, 6) servant à empêcher le coupage dû aux mouvements de traction inopinés, caractérisé en ce entre la lame (4) et la ceinture de sécurité (8) est disposé à l'intérieur de l'élément à cadre (1, 2) un curseur (9) qui soutient la ceinture de sécurité (8) et la maintient en état tendu lors du mouvement de coupage.
